# EUROPEAN PATENT APPLICATION

(11) **EP 4 851 708 A1**
(43) Date of publication of application: **09.12.2026**
(21) Application number: 25180763.2
(22) Date of filing: 04.06.2025
(51) Int. Cl.: G02F 1/35, G02F 1/365

(54) **OPTICAL FREQUENCY COMB**

(71) Applicant: Solinide Photonics AB, 433 34 Partille (SE)
(72) Inventor: HELGASON, Oskar Bjarki, 433 48 Partille (SE)
(74) Representative: Lind Edlund Kenamets Intellectual Property AB

(57) **Abstract**

The present disclosure relates to an optical frequency comb device comprising a main optical resonator and an optical waveguide bus. The main optical resonator and the optical waveguide bus are spatially arranged to form a coupling interface that has at least two coupling regions and at least one delay region to enhance optical coupling of a first set of longitudinal frequency modes of the main optical resonator to the optical waveguide bus, and suppress optical coupling of a second set of longitudinal frequency modes of the main resonator to the optical waveguide bus.

## Description

### FIELD OF THE INVENTION

The present disclosure generally relates to an optical frequency comb device. More specifically, aspects and embodiments herein relate to an optical frequency comb device comprising a main optical resonator and an optical waveguide bus coupled thereto for generating tailored spectral outputs.

### BACKGROUND OF THE INVENTION

Resonator-based optical frequency comb devices such as microresonator comb technology has seen profound development over the last decade. They typically feature an optical microresonator or microcavity which provides multiple equidistant coherent lines in the frequency domain when pumped with a continuous wave (CW) laser through an optical waveguide. The frequency generation is the result of compelling dynamics of the microcavity, involving parametric generation and the formation of dissipative solitons. Recent advances have featured elaborate designs that improve the microcomb performance, such as self-injection locking with the CW pump laser and the use of coupled cavities for improved energy efficiency and initiation dynamics. Moreover, tremendous progress in co-integration of microcombs with other platforms has been shown, enabling fully integrated systems comprising the combination of essential components such as CW lasers, photodetectors, filters, etc.

The conventional design of a microcomb devices features fixed coupling rate between the waveguide bus and the main optical resonator implemented using a point coupling arrangement. The spectral distribution of the generated comb will mainly be dependent on the dynamics of nonlinearities and dispersion of the microcavities. The inherent disadvantage with this approach is that the resulting spectral distribution of the outcoupled waveform rarely matches the requirement of the target application. Various applications involving implementation of optical frequency combs demand specific spectral profile of the output comb spectrum. For instance, telecommunication applications generally require an even distribution of comb lines in the comb spectrum that demonstrate a rectangular spectrum profile over the target bandwidth. Furthermore, applications that require generating a self-referencing beat note, e.g., for stabilization of an optical frequency comb device, may benefit extensively from selectively assigning high output power to the respectively selected comb frequency lines for self-referencing. Point-coupling schemes typically feature strong coupling at high wavelengths and weak coupling at lower wavelengths of the frequency comb. As such, single cavity operation rarely provides the ideal spectral profile for a given application. Methods deployed so far typically focus on dispersion engineering, such as careful engineering of the higher order dispersion or the involvement of coupled cavities.

Other approaches such as a pulley-coupling configuration, may be useful for sufficient coupling in extreme broadband applications, but have considerable limitations in the shape of the comb spectrum and fall short in narrowband operation. Yet another alternative approach has been to put the output from the microcomb device through a spectral shaping mechanism, e.g., using wavelength selective amplification/attenuation, which would significantly limit the energy efficiency of the overall system.

All of the conventional approaches suffer from limited controllability and tunability. Accordingly, there is a need in the field of design and fabrication of optical frequency comb devices for effective solutions to achieve optical comb spectrum tailored for intended applications.

### SUMMARY OF THE INVENTION

It is an object of the present invention to provide optical frequency comb devices and a method of generating tailored output spectra for optical frequency comb devices for solving or at least alleviating some of the above-mentioned drawbacks and problems of the prior art.

These and other objects may be achieved by the optical frequency comb devices as defined in the appended independent claims herein. Various embodiments of the present invention have been defined in the dependent claims.

The term exemplary is in the following to be interpreted as serving as an example, example implementation, instance, scenario or illustration.

According to a first aspect of the present invention, there is provided an optical frequency comb device comprising a main optical resonator made of a first material having nonlinear material characteristics. Further, the optical frequency comb device comprises an optical waveguide bus configured to receive input laser light, and to be optically coupled to the main optical resonator, such that the input laser light is coupled to the main optical resonator to generate an optical frequency comb. The main optical resonator and the optical waveguide bus are spatially arranged to form a coupling interface that has at least two coupling regions and at least one delay region. The coupling interface is configured to enhance optical coupling of a first set of longitudinal frequency modes of the main optical resonator to the optical waveguide bus, and to suppress optical coupling of a second set of longitudinal frequency modes of the main resonator to the optical waveguide bus. The coupling region is configured to generate a tailored output spectrum of the optical frequency comb over a target frequency bandwidth including the first set of longitudinal frequency modes.

In some example embodiments, the main optical resonator made from the first material may have a normal dispersion or an anomalous dispersion.

In some exemplary embodiments, each delay region may be adapted to have a respective geometrical shape and arrangement along the coupling interface to generate a corresponding frequency-selective spectral distribution of a coupling factor of the main optical resonator. Each generated frequency-selective spectral distribution of the coupling factor of the main optical resonator may be associated with a corresponding spectral power distribution of the optical frequency comb lines.

The present invention is based at least partly on the realization that by engineering the coupling interface between the main optical resonator and the waveguide bus in the optical frequency comb devices presented herein, highly controllable and tunable frequency-selective spectral outputs for various applications can be generated. Accordingly, coupling and/or delay regions comprised in the coupling interface are adapted to have a respective geometrical shape and arrangement along the proposed coupling interface in order to generate a tailored frequency-selective spectral distribution of a coupling factor of the main optical microresonator over a target bandwidth. This in turn leads to a controlled adjustment and tuning scheme of the coupling factor for achieving high-power comb lines in the tailored frequency-selective spectral comb output over the target bandwidths.

The geometrical shape and arrangement of the delay regions can be customized in order to generate various distribution profiles for the coupling factor between the optical waveguide bus and the main optical microresonator. This way, locations of strong and suppressed coupling of the frequency modes can be effectively engineered which will result in generating corresponding comb spectral profiles having the desired spectral power distribution of comb lines over the target frequencies.

In some exemplary embodiments, the main optical resonator may have an annular, polygonal, toroidal, or an irregular shaped circuit structure.

In some example embodiments, a portion of the waveguide bus at the coupling interface may conform to the structural shape of a corresponding portion of a perimeter of the main optical resonator.

In some examples, the portion of the optical waveguide bus may be arranged to partially encircle the corresponding portion of the perimeter of the main optical resonator along the coupling interface.

In some example embodiments, the conforming or the partially encircling portion of the waveguide bus at the coupling interface may have a meandering profile.

In some example embodiments, each delay region may be formed by a respective crest portion of the meandering portion of the waveguide bus. The crest portion may have a respective predetermined radial distance relative to a corresponding portion of the perimeter of the main optical resonator. Each delay region may have a respective delay factor to be imposed on the first and second sets of longitudinal frequency modes. The delay factor may be proportional to the predetermined radial distance.

In the present context, the crest portions of the engineered waveguide bus are to be understood as undulating portions of the meandering interface, extending outward and away from the boundary portion of the main optical resonator. In contrast, the trough portions are to be understood as undulating portions of the meandering interface, extending toward the boundary portion of the main optical resonator.

In some exemplary embodiments, the corresponding portion of the perimeter of the main optical resonator, being conformed to or encircled by the portion of the optical waveguide bus along the coupling interface, may have a meandering profile.

In some example implementations, each delay region may be formed by a crest portion of the meandering portion of the main optical resonator having a respective predetermined radial distance relative to a corresponding portion of a perimeter of the optical waveguide bus. Each delay region may have a respective delay factor, to be imposed on the first and second sets of longitudinal frequency modes. The delay factor may be proportional to the predetermined radial distance. The crest portion and trough portions of the meandering portion of the main optical resonator in these examples are to be understood similar to what was described with respect to the waveguide bus in the foregoing, but from the perspective of the main optical resonator.

For instance, crest portions of the engineered main optical resonator may be understood as the undulating portions of the meandering interface, extending inwards (e.g. as a concave arc curving toward the center part of the resonator) and away from the boundary of the optical waveguide bus along the coupling interface.

It should be clear to the skilled person that different optical resonators in the example implementations presented herein may have different or similar geometrical shapes or sizes, e.g. all resonators may have annular or circular or ring shapes. In some examples, one optical resonator such as a main optical resonator may have an annular shape, while another resonator such as an auxiliary resonator may have a polygonal geometry such as rectangular geometry or irregular shape, and so forth.

In some exemplary embodiments, the optical frequency comb device may further comprise a first auxiliary optical element arranged adjacent to a respective delay region of the at least one delay region. The first auxiliary optical element may be adapted to be optically coupled to its respective delay region in order to enable a tunable suppression of optical coupling of the second set of longitudinal frequency modes of the main resonator.

In some embodiments, the optical frequency comb device may further comprise a second auxiliary optical element arranged adjacent and optically coupled to the main optical resonator. The second auxiliary optical element may be configured to induce a frequency shift to a selected longitudinal frequency mode of the main optical resonator associated with a frequency of the input laser light in order to enhance a power conversion efficiency of the generated optical frequency comb.

In some exemplary embodiments, the first auxiliary optical element may comprise a first auxiliary optical resonator.

In some exemplary embodiments, the second auxiliary optical element may comprise a second auxiliary optical resonator.

In some exemplary embodiments, the first and/or the second auxiliary optical elements may comprise respective heater modules arranged in operative connection with the first and/or the second auxiliary optical resonators. The heater modules may be configured to tune a resonance frequency of the first and/or the second auxiliary optical resonators respectively.

In some exemplary embodiments, the at least two coupling regions and the at least one delay region of the coupling interface may be adapted to enforce constructive and destructive interferences on the first and the second sets of longitudinal frequency modes of the main optical resonator.

In some exemplary embodiments, the delay factor of each delay region may be tunable by adjusting the geometrical shape of that delay region, and/or by adjusting the respective predetermined radial distance of that delay region relative to the corresponding portion of the perimeter of the main optical resonator or the waveguide bus, and/or by adjusting a predetermined geometrical width parameter of that delay region, and/or by adjusting the arrangement of that delay region along the coupling interface.

According to a second aspect, there is provided a method of generating a frequency-selective spectral output for an optical frequency comb device. The method comprises providing a main optical resonator made of a first material having nonlinear material characteristics and an optical waveguide bus configured to be optically coupled to the main optical resonator. The optical frequency comb device comprises a coupling interface formed between the main optical resonator and the optical waveguide bus by spatially arranging the main optical resonator and the optical waveguide bus such that the coupling interface has at least two coupling regions and at least one delay regions. The method further comprises providing an input laser light to be received by the optical waveguide bus such that the input laser light is coupled to the main optical resonator to generate an optical frequency comb. The method further comprises enhancing optical coupling of a first set of longitudinal frequency modes of the main optical resonator to the optical waveguide bus, and suppressing optical coupling of a second set of longitudinal frequency modes of the main resonator to the optical waveguide bus by the at least two coupling regions and the at least one delay region. The method further comprises selectively generating a tailored output spectrum of the optical frequency comb over a target frequency bandwidth including the first set of longitudinal frequency modes.

In some exemplary embodiments, the optical frequency comb device may further comprise a first auxiliary optical element arranged adjacent to respective delay regions of the at least one delay region in the coupling interface (103). Accordingly, the method may further comprise providing the first auxiliary optical element in form of a first auxiliary optical resonator and a respective heater module arranged in operative connection with the respective first auxiliary optical resonator. The method may further comprise tuning a resonance frequency of the first auxiliary optical resonators by controlling operation of the respective heater module for each of the first auxiliary optical resonators. The method may further comprise imposing an additional delay on the first and second sets of longitudinal frequency modes of the main microresonator and thereby enabling a tunable suppression of optical coupling of the second set of longitudinal frequency modes and enhancement of optical coupling of the first set of longitudinal frequency modes of the main microresonator.

Further embodiments of the different aspects are defined in the dependent claims. It is to be noted that all the embodiments, elements, features and advantages associated with the first aspect also analogously apply to the second aspect of the present disclosure and *vice versa.*

These and other features and advantages of the present disclosure will be further explained in the following detailed description.

### BRIEF DESCRIPTION OF THE DRAWINGS

This and other aspects of the present invention will now be described in more detail, with reference to the appended drawings showing embodiments of the present invention. The drawings are only schematic and the relative dimensions of some structures and layers may be exaggerated and not drawn to scale. Rather the dimensions may be adapted for illustrational clarity and to facilitate understanding.
Figs. 1a - d show schematic illustrations of two prior art optical frequency comb devices and related comb output spectra.
Figs. 2a - d show a schematic illustration of an optical frequency comb device and related comb output spectra according to some embodiments of the present disclosure.
Figs. 2e - 2g show a schematic illustration of a modified version of the optical frequency comb device of Fig. 2a and related comb output spectra according to some embodiments of the present disclosure.
Figs. 3a - 3d show schematic illustrations of optical frequency comb devices according to some embodiments of the present disclosure.
Figs. 3e - 3h show a schematic illustration of a modified version of the optical frequency comb device of Fig. 2a and related comb output spectra according to some embodiments of the present disclosure.
Figs. 4a - 4d show schematic illustration of an optical frequency comb device and corresponding output spectra according to some embodiments of the present disclosure.
Figs. 5a - 5d show schematic illustration of yet another optical frequency comb device and corresponding output spectra according to some embodiments of the present disclosure.
Figs. 6a - 6d show schematic illustration of a further optical frequency comb device and corresponding output spectra according to some embodiments of the present disclosure.
Fig. 7 shows a schematic flowchart illustrating a method in accordance with several embodiments of the present disclosure.

### DETAILED DESCRIPTION

The following disclosure presents various embodiments or examples for implementing different aspects of the provided subject matter. Specific examples of implementing the method are described to simplify the disclosure. These examples are not intended to be limiting. Additionally, reference numerals and/or letters may be repeated in various examples for simplicity and clarity, without implying a specific or limiting relationship between the different embodiments and/or configurations discussed, unless stated otherwise.

It is further to be noted that terms such as "first" and "second" etc. with reference to elements or steps may be used herein as labels to facilitate distinguishing between different elements and need not necessarily imply that such elements or steps are arranged or performed in that particular order, unless stated otherwise.

In the context of the present invention the directions and orientations such as vertical, horizontal, longitudinal, and lateral directions and extensions as well as extension of a component along a boundary or interface such as a coupling interface need to be interpreted broadly and generally refer to the geometrical extensions of objects in a coordinate system. The coordinate system may be a three-dimensional Cartesian coordinate system or a spherical coordinate system. The spatial extensions and positions of objects may be defined in at least one plane of the coordinate system e.g. by using x, y, z coordinates and their corresponding angles.

It is also to be understood that the terminology used herein is for the purpose of describing particular embodiments only and is not intended to be limiting. It should be noted that, as used in the specification and the appended claim, the articles "a", "an", "the", and "said" are intended to mean that there are one or more of the elements unless the context clearly dictates otherwise. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

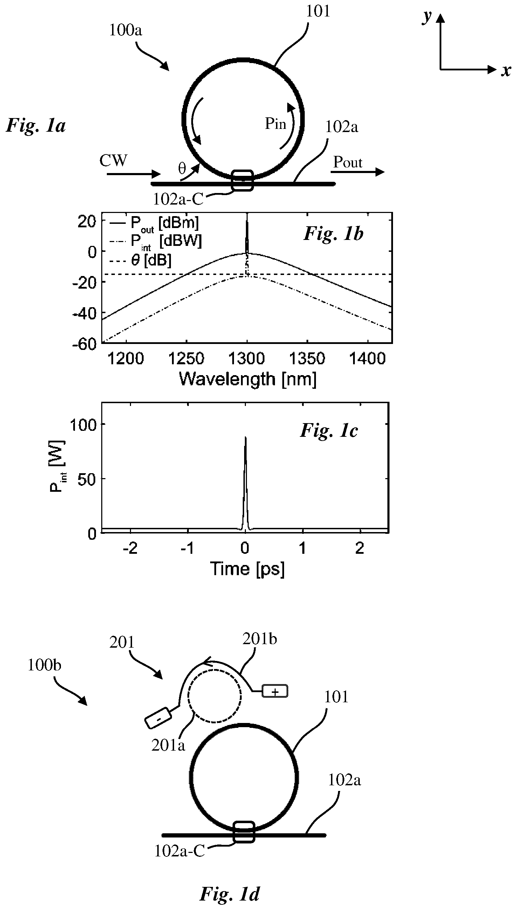

Fig. 1a shows a schematic illustration of a prior art optical frequency comb device 100a that comprises a main optical resonator 101 spatially arranged in close physical proximity of an optical waveguide bus 102a. In some example implementations, the optical resonator 101 may be an optical microresonator 101. Accordingly, in the present context when the optical resonator 101 is an optical microresonator 101, the optical frequency comb device 100a may be referred to as a microresonator optical frequency comb device 100a or a microresonator frequency comb device 100a or a microresonator frequency comb 100a, or simply a microcomb 100a or microcomb device 100a.

In the present context, optical resonators, or optical cavities, are to be understood as engineered structures that confine electromagnetic radiation, i.e., the laser light, through multiple internal reflections, enabling the build-up of circulating optical fields at discrete resonant frequencies. These discrete resonant frequencies may also be referred to as modes of the optical cavities or longitudinal modes of the optical cavities. The optical microresonators or microcavities may have characteristic dimensions ranging from tens to hundreds of micrometers. Dimensions may however extend into the millimeter regime depending on the desired application. The specific dimensions may be influenced by factors such as the desired free spectral range (FSR) and the operational wavelength of the optical comb. For instance, smaller optical resonators yield larger FSRs. Microresonators exhibiting high quality (Q) factors support substantial intra-cavity field enhancement under continuous wave (CW) laser pumping. This intra-cavity field enhancement is pivotal for efficient nonlinear optical processes, facilitating the generation of plurality of evenly spaced frequency lines, often enabled by the formation of dissipative Kerr solitons (DKSs). Kerr solitons are to be understood as nonlinear, self-localized waveforms that emerge in driven-dissipative systems due to the interplay of Kerr nonlinearity, dispersion engineering of the optical resonators, and cavity dissipation. The waveforms and spectral envelopes of dissipative Kerr microcombs vary with the group velocity dispersion of the microresonator. DKS formation is supported in both anomalous and normal dispersion regimes, leading to complex soliton dynamics including breathing modes, bound states, and multi-soliton configurations. Conventional soliton microcombs (sometimes called bright soliton combs) require anomalous dispersion, however normal dispersion microcombs (sometimes called dark pulse combs) are also possible. It should be noted that while DKS can exist in both dispersion regimes, the characteristics and stability of the solitons differ between the anomalous and linear dispersion regimes.

In the time domain, a DKS manifests as a localized temporal waveform that circulates synchronously with the cavity's FSR, resulting in a frequency comb in the spectral domain with equidistant modes or frequency comb lines that correspond to the longitudinal modes of the optical resonator. Further details regarding principles of working and generations of resonator-based optical frequency combs are readily available to a skilled reader from the literature and will not be discussed in detail herein so as not to obscure the scope of the present disclosure.

Moving on, in Fig. 1a the waveguide bus 102a is arranged to receive the CW laser light as input laser light. The CW laser light may be provided by any type of suitable CW laser source arranged locally integrated with and comprised in the microresonator optical frequency comb device 100a or alternatively, be arranged external to the microresonator optical frequency comb device 100a. Even though various example implementations herein will be explained by referring to an input CW laser, it should be appreciated that alternatively, in some cases, a multi-frequency laser source may be used, where one or more of the laser's frequency components is used to excite the comb generation. Further, the waveguide bus 102a is arranged to be optically coupled to the main microresonator 101. The waveguide bus 102a may be linearly coupled to the main optical resonator 101. In operation, the CW input laser light received in the waveguide bus 101 is coupled to the main microresonator 101 via the waveguide bus 102a. In this example, the main microresonator 101 is an annular or ring-shaped microresonator 101 made from a first resonator material with nonlinear material characteristics e.g., with third order nonlinearity and having anomalous dispersion. The single anomalous dispersion optical cavity 101 has a fixed coupling rate for all wavelengths, that results in the classic sech-shaped soliton spectrum and temporal profile. Fig. 1b shows a simulated spectral envelope of the outcoupled power (Pout), intracavity power (Pint) and (0) which is the ratio of power coupled from the waveguide bus to the optical ring cavity 101. Fig. 1c shows the intracavity temporal power distribution.

In optical resonators engineered with anomalous dispersion, the spacing between consecutive longitudinal modes increases with optical frequency, resulting in higher-frequency (blue) components traveling faster than lower-frequency (red) ones. When such a resonator is pumped with a CW laser tuned near a longitudinal mode, it can support the formation of DKS. However, for solitons to exist, the pump laser is red-detuned relative to the cavity resonance modes it pumps. This leads to the laser frequency being slightly lower than the resonance frequency of the pumped longitudinal modes. However, this red detuning, also known as soliton detuning, leads to reduced coupling efficiency of the CW pump laser power into the optical resonator during operation of the optical frequency comb device. Consequently, achieving and maintaining soliton states requires careful management of the laser-resonator detuning to balance efficient power coupling with the conditions necessary for soliton formation.

An advantageous solution to this problem has been previously described in EP4116767 by the same applicant, wherein said document is hereby incorporated in its entirety by reference. In short, as described in EP4116767, a physical perturbation may be introduced into the main optical resonator to shift one or more of its longitudinal modes relative to their uncoupled positions. This induced frequency shift partially compensates for the inherent pump frequency detuning as described above. Thus, the frequency shift improves the coupling of CW laser light into the optical resonator and as a result, the overall power conversion efficiency (extracted comb power relative to input pump power) is enhanced. As shown in Fig. 1d, the optical frequency comb device 100b comprises an auxiliary optical element 201 that induces a frequency shift to at least one longitudinal mode of the optical resonator 101 associated with the pump CW laser frequency, increasing the frequency comb's conversion efficiency. This shift allows the CW laser to operate closer to a resonance frequency of the main optical resonator 101, effectively reducing detuning and enhancing optical coupling between the pump laser and the resonator 101. The auxiliary optical element may comprise an auxiliary optical resonator 201a that may be made of a resonator material, which has a third order nonlinearity and an anomalous resonator dispersion. Alternatively, the auxiliary optical resonator may be made of a resonator material having a normal resonator dispersion. The auxiliary optical resonator 201a may be tunable by controlling operation of an auxiliary heater such as heater module 201b arrange in operational connection with the auxiliary optical resonator 201a.

In several embodiments, the main and/or auxiliary optical resonators may be made of Silicon nitride. Silicon nitride is a versatile material platform for photonic devices to its wide transparency window, strong Kerr nonlinearity, high refractive index, and absence of two-photon absorption. This allows the development of waveguides and resonators with ultralow loss, in the order of ldB/m or lower, which have proven to be advantageous for nonlinear optics applications such as frequency comb generation.

In either of the optical frequency comb devices 100a, 100b having the single unperturbed optical resonator or having the auxiliary resonator for applying physical perturbations to the main optical resonator respectively, the resonant coupling of the CW laser from the waveguide bus 102a to the main optical resonator 101 and *vice versa* is subject to a point-coupling mechanism at a coupling region defined by a spatial point 102a-C where the straight or otherwise rectilinear waveguide bus 102a closely extends past the main optical resonator 101. As mentioned earlier, the point-coupling arrangements suffer from wavelength dependency of the coupling factor for different frequency modes. Some attempts have been made in order to engineer the locations of strong coupling modes for broadband comb devices, however, highly controlled and tunable coupling in optical frequency combs, particularly over narrow target bandwidths remain an unsolved challenge.

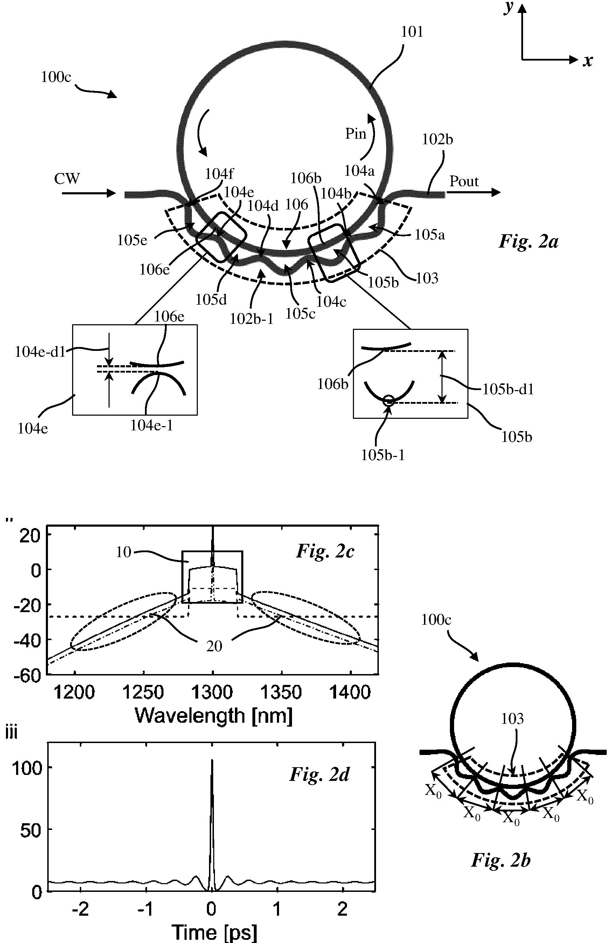

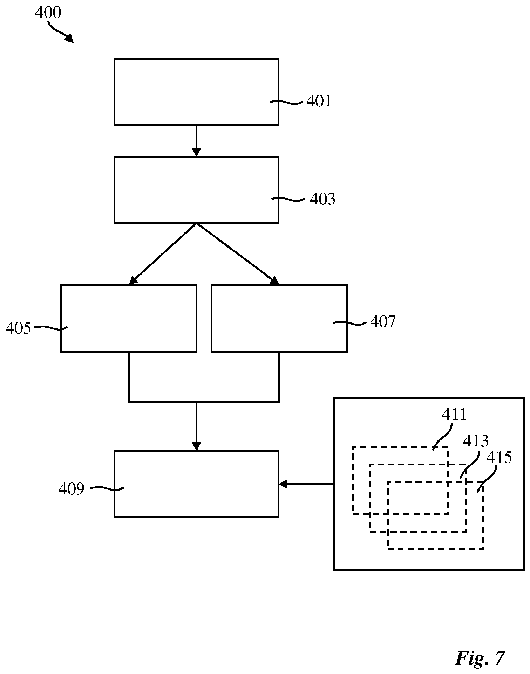

The present inventors have realized that optimizing the output spectrum of the optical frequency comb device could be advantageously realized by engineering the spectral distribution of the coupling factor of the cavity, i.e., the coupling factor between the main optical resonator and its respective waveguide bus extending past the main resonator. Various embodiments as described in the following with reference to Figs. 2a - 2g, Figs. 3a - 3d, Figs. 3e - 3h, Figs. 4a - 4d, Figs. 5a - 5d, Figs. 6a - 6d, and the method of Fig. 7 will further elucidate the presented solution according to this disclosure. The tailored coupling rate of the optical cavity is designed and fabricated according to Mach Zehnder (MZ) coupling approach. The basic working principles of a MZ interferometer for providing spectrally dependant interference including spectrally dependant interference through the recombination of a split input wave are presumed to be available to the skilled person and will not be discussed further herein.

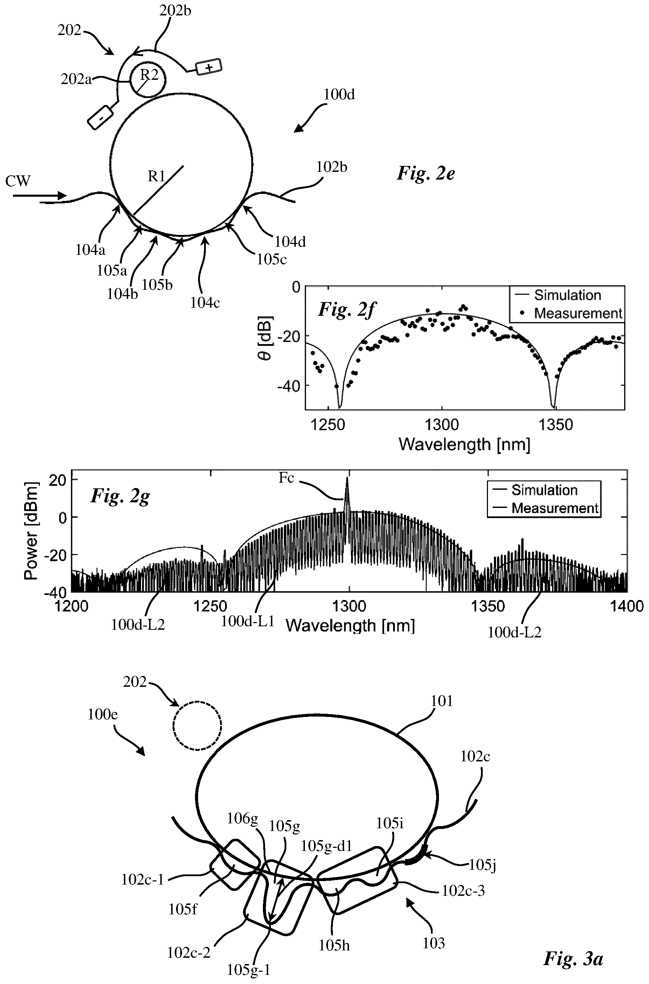

Accordingly, soliton generation in the optical frequency comb devices can be realized where the output spectrum of the comb demonstrates enhanced power-per comb line for the target bandwidth and a sharp fall-off for the comb lines outside the target bandwidth as e.g. shown in Figs. 2c and 2g.

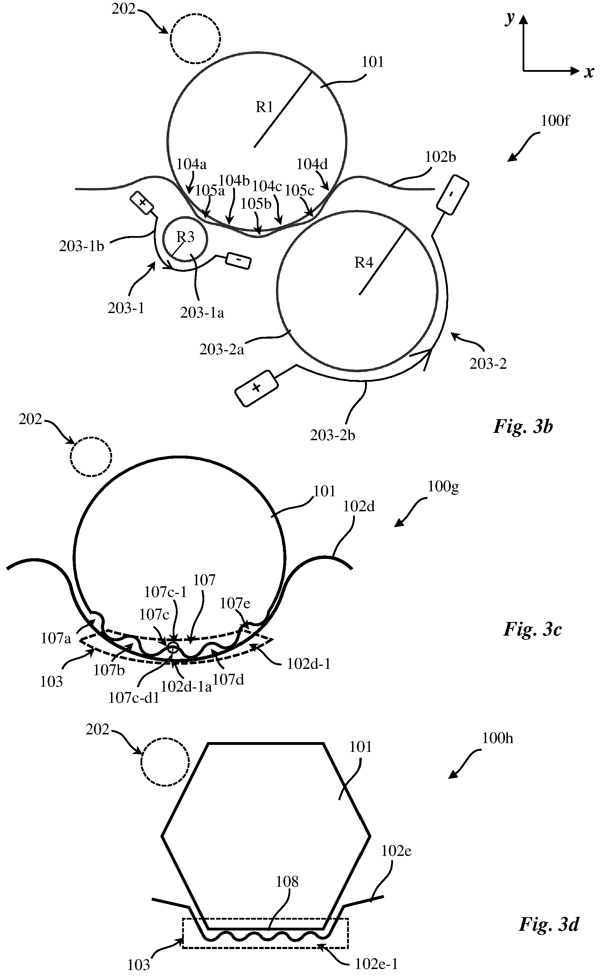

As shown in Fig. 2a, an optical frequency comb device 100c according to several embodiments herein is presented. The basic principles of working of the optical frequency comb device 100c is similar to that of devices 100a and 100b discussed with reference to Figs. 1a - 1d. For example, in some exemplary embodiments, the main optical resonator 101 may be made from nonlinear optical properties and have normal or anomalous dispersion. The main optical microresonator 101 in this example is made of resonator material with third-order nonlinearity and has been dispersion-engineered to have anomalous dispersion. In this example the main optical resonator 101 is a microresonator 101 and the optical frequency comb device will be referred to as the microresonator optical frequency comb device (MOFCD) 100c in the rest of this description. It should however be clear to a person skilled in the art that the dimensions of the main optical resonator 101 may be adjusted depending on respective applications and may be in the millimetre range or similar. When the MOFCD 100c is in operation, DKS are generated and maintained in the main optical microresonator 101. The MOFCD 100c comprises an optical waveguide bus 102b referred to as an engineered optical waveguide bus 102b herein configured to receive a CW, input pump laser light. The engineered optical waveguide bus 102b is further configured to be optically coupled to the main optical microresonator 101, such that the CW input laser light is coupled to the main optical microresonator 101 in order to generate an optical frequency comb. The main optical microresonator 101 and the engineered optical waveguide bus 102b are spatially arranged to form a coupling interface 103. An example coupling interface 103 is shown by a dashed arced area in Fig. 2a that includes a portion 102b-1 of the waveguide bus 102b and a corresponding portion 106 of the main optical resonator 101 undergoing the optical coupling during operation of the optical frequency comb 100c. The coupling interface 103 will be referred to as an engineered coupling interface 103 in order to emphasize that the coupling interface 103 is modified according to several embodiments and aspects herein to achieve a highly controlled and tunable output comb spectrum profile over the desired target bandwidths. In some embodiments, the engineered coupling interface 103 may be realized by means of spatial arrangement of the engineered optical waveguide bus 102b with respect to the main optical resonator 101. Additionally or alternatively, the engineered coupling interface 103 may be realized by means of spatial arrangement of an engineered main optical resonator 101, i.e., a portion of the main optical resonator 101 such as portion 106 being engineered to include the components, i.e., coupling and delay regions affecting the comb output spectrum, as will be discussed further below e.g. with reference to Fig. 3c.

According to several embodiments, the engineered coupling interface 103 comprises at least two coupling regions to allow optical coupling between the engineered optical waveguide bus 102b and the main optical microresonator 101. By a coupling region in the present context it is meant a region where the two waveguides are so closely positioned that the respective optical fields of waveguides are allowed to interact and optical power can be transferred from one waveguide to another.

In the example there are six coupling regions 104a, 104b, 104c, 104d, 104e, 104f have been shown. It should be appreciated that the number of the at least two coupling regions may be larger or smaller than the six regions of this example to reach the desired effect. Furthermore, the coupling interface 103 comprises at least one delay region(s). The at least two coupling regions and the at least one delay region 105a - 105e are configured to enhance optical coupling of a first set of longitudinal frequency modes (frequency comb lines having a first set of wavelengths) of the main optical microresonator 101 to the engineered optical waveguide bus 102b and to suppress optical coupling of a second set of longitudinal frequency modes of the main microresonator 101 to the engineered optical waveguide bus 102b. In some example embodiments, the coupling interface 103 may comprise at least two delay regions such as the delay regions 105a - 105e as will be discussed further below.

By a delay region in the present context, is meant a region where the interaction between the respective optical waveguides are interrupted due to the designed spatial separation of the main optical resonator and the waveguide bus according to several example implementations discussed herein.

In this example implementation, the optical frequency comb device comprises five delay regions 105a, 105b, 105c, 105d, 105e shown by way of example.

The coupling regions 104a - 104f, and the delay regions 105a - 105e of the coupling interface are adapted to enforce constructive and destructive interferences on the first and the second sets of longitudinal frequency modes of the main optical resonator 101.Accordingly, the combination of coupling regions and delays imposed by the delay regions cause the enhancement and suppression of the coupling of the first and the second sets of the longitudinal modes respectively.

It should be clear to the skilled person that the above-mentioned number of the coupling and/or delay regions in the coupling interface 103 are mere examples for illustrative purposes and designed to attain a particular output comb spectrum profile, such as the example spectral profile shown in Fig. 2c or Fig. 2g. It should thus be appreciated that the number of the coupling and/or delay regions in the coupling interface 103 may accordingly vary depending on the design parameters and the desired coupling/delay profiles to be imposed on the output comb spectrum. In some embodiments, the number of coupling and/or delay regions may be two, three, four, five, ten, twenty, thirty, hundred and so on in order to construct a customized MZ interferometer coupler in the coupling interface 103.

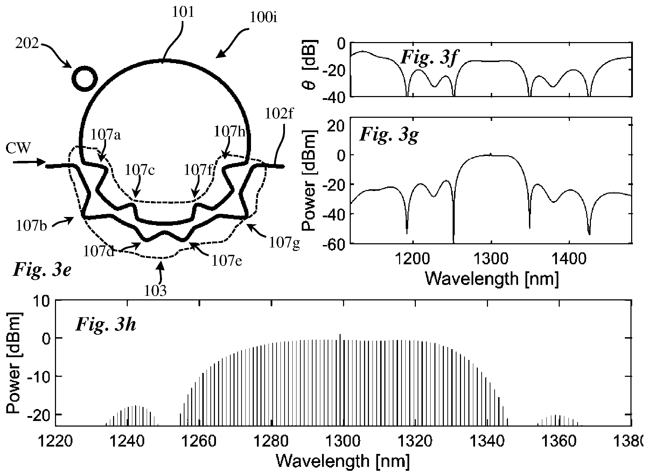

The customized MZ interferometer coupler to implement wavelength dependent coupling designs according to embodiments herein, has been utilized to couple light in and out of the microresonators as e.g. discussed in conjunction with Figs. 2a, 2b and Fig. 2e. Particularly, Fig. 2e as discussed further below shows an example of such configuration, including four coupling regions 104a - 104d and three delay regions 105a - 105c. The delay is realized by implementing a longer optical path length in the bus waveguide e.g. the bus waveguide 102b compared to the microresonator e.g. the microresonator 101 along the delay region. As it will be discussed further, the delay regions may also be implemented by changing the length of the optical path of the microresonator 101 with respect to the waveguide bus, as shown in the example of Figs. 3c and 3e.

The total response of the combined coupling regions can be calculated through multiplication as
$\left(\begin{matrix}{A}_{out} \\ {A}_{int}^{′}\end{matrix}\right) = \left({S}_{tot}\right) \left(\begin{matrix}{A}_{in} \\ {A}_{int}\end{matrix}\right) = \left(\begin{matrix}{S}_{11} & {S}_{12} \\ {S}_{21} & {S}_{22}\end{matrix}\right) \left(\begin{matrix}{A}_{in} \\ {A}_{int}\end{matrix}\right) ,$
where *Sₜₒₜ = C*₀*D*₀*C*₁*D*₁ ··· *C*_{*N*-1}*D*_{*N*-1}*C_{N}* is the combined scattering matrix, *Cₙ* being the scattering matrix of a coupling region number n, *Dₙ* being the scattering matrix of a delay region number n, and N denoting the total number of coupling regions. *Aᵢₙ* is the optical field in the bus waveguide entering the MZ coupling region, *Aₒᵤₜ* is the optical field in the bus waveguide leaving the MZ coupling region, *Aᵢₙₜ* is the optical field in the main microresonator waveguide entering the MZ coupling region, *A'ᵢₙₜ* is the optical field in the main microresonator entering leaving the MZ coupling region, These transfer matrices have the form
${C}_{n} = \left(\begin{matrix}\sqrt{1 - {θ}_{n}} & i \sqrt{{θ}_{n}} \\ i \sqrt{{θ}_{n}} & \sqrt{1 - {θ}_{n}}\end{matrix}\right) and {D}_{n} = \left(\begin{matrix}{e}^{i Δ ϕ} & 0 \\ 0 & 1\end{matrix}\right) ,$
where *θₙ* is the portion of power coupled between waveguides in coupling region n, and Δ*ϕ* is the accumulated phase difference between the bus waveguide 102b and resonator waveguide i.e. the microresonator 101 in individual delay regions of the coupling interface 103. The phase delay is calculated as Δ*ϕ = β^{MZ}*Δ*Lₙ* = Δ*Lₙ(β*₀ + *β*₁(*ω* - *ω*₀)), where Δ*Lₙ* is physical length difference between the bus waveguide 102b and the resonator 101 in the delay section n, and *β^{MZ}* is the loss-less propagation constant of the waveguide. The physical length difference between the bus waveguide 102b and the resonator 101 in the respective delay regions of the coupling interface will also be referred to as a predetermined radial distance of each delay region relative to the corresponding portion of a perimeter of the main optical microresonator 101.

The propagation constant is expressed in the form of a Taylor series from the angular frequency *ω*₀. Using a first order expansion, the propagation is expressed as *β^{MZ}= β*₀ + *β*₁(*ω* - *ω*₀), where *ω* is the angular optical frequency, *β*₁ *= n_{g}*/*c*₀*, c*₀ is the speed of light and *n_{g}* is the waveguide group index. *β*₀ is related to the phase velocity, and *β*₀Δ*Lₙ* describes a constant phase offset. *β*₀Δ*Lₙ* may be set as an integer multiple of 2*π* in some embodiments herein.

The customized MZ coupler design, i.e., the coupling interface 103 according to the embodiments herein facilitates constructive and destructive interferences at specific wavelengths of the optical frequency comb device. This effectively causes a selected first group of wavelengths to be strongly coupled in and out of the main optical resonator 101 (in phase frequencies), while the coupling of other wavelengths in a selected second group outside the desired bandwidth is suppressed (anti-phase frequencies). One of the surprising advantageous effects of the presented engineered coupling interface 103 is that a DKS generated within the main optical resonator 101 of the optical frequency comb devices according to various embodiments herein can be maintained in the optical cavity even under the operational conditions when the coupling rate between the waveguide bus and the main optical microresonator 101 is effectively tuned by the engineered coupling interface 103. Moreover, the proposed solutions herein advantageously overcome problems with limited tunability of group velocity dispersion (GVD) in the optical frequency comb devices. For instance, when generating a narrow output comb spectrum, a very strong GVD is required, which is challenging to achieve by the conventional engineering of the material platform.

The tuning of the spectral profile of the output comb spectrum may be achieved by several tuning parameters. For instance, the geometrical shape of the delay regions may be adjusted to impose a corresponding delay factor to the frequency modes. Alternatively or additionally, the respective predetermined radial distance of each delay region relative to the corresponding portion of a perimeter of the main optical microresonator may be adjusted. Even further, respective predetermined radial distance of each delay region relative to the corresponding portion of the perimeter of the waveguide bus may be adjusted. For instance, the delay regions may instead be realized by engineering the main optical cavity, as shown and explained with reference to Fig. 3c.

Alternatively or additionally, the delay factor of the delay regions may be adjusted by adjusting a predetermined geometrical width parameter of the delay regions, or by the spatial arrangement of the delay regions along the coupling interface 103, i.e., distribution of the delay regions in symmetrical or asymmetrical patterns along the coupling interface 103. For instance, one or more delay regions may have a wider width, i.e., thicker than some other delay regions or the like as shown for the exemplary delay region 105j at which the optical waveguide bus 102c has a thicker cross section compared to the other delay regions in the engineered optical waveguide 102c in Fig. 3a. Even further, the delay factor imposed on the frequency modes outside the target bandwidth may be tuned by adjusting the number of delay regions along the coupling interface 103, with each additional delay region resulting in increased power attenuation of the comb lines outside the desired bandwidth.

In some embodiments, the delay factor of each delay region indicative of the destructive interference enforced by that delay region on the second set of longitudinal frequency modes of the main optical microresonator may be tunable and controlled by an auxiliary optical element to shape the output comb spectrum as shown in the examples of Fig. 3b.

According to embodiments, the main optical microresonator resonator 101 may have an annular, polygonal, or toroidal structure, or an irregular shaped circuit structure. The corresponding portion 102b-1 of the perimeter of the waveguide bus at the coupling interface 103 may conform to the structural shape of the portion 106 of the perimeter of the main optical resonator 101. In other words, the portion of the waveguide bus that may conform to the shape of the main optical resonator 101 comprises the coupling interface 103 or may be substantially the same as the coupling interface 103. For instance, as shown in the example implementations in Figs. 2a and 2e, the main optical resonator 101 has a circular or ring-shaped geometry and the waveguide bus 102b is engineered to at least partially encircle the corresponding portion 106 of the perimeter of the main optical resonator at the coupling interface 103. By conforming to the structural shape of the portion of the perimeter of the main optical resonator 101 in the present context it is meant that the waveguide bus 102b and the main optical resonator 101 geometrically follow or align with the sides and angles of each other along the coupling interface 103.

To mention two non-limiting examples to aid the reader, if the main optical resonator 101 would have an arced-shaped geometry (assuming an annular or elliptical geometry of the main resonator 101) along the coupling interface 103, the corresponding portion of the waveguide bus would conform to this shape e.g. by wrapping around this arced portion (see e.g., the waveguide bus 102b in example Fig. 2a and the waveguide bus 102c partially surrounding the elliptical main optical resonator 101 in Fig. 3a). Similarly, if the portion of the main resonator 101 in the coupling interface 103 extends along a straight line, e.g., corresponding to a side of a polygonal geometry of the main optical resonator 101, the waveguide bus will also extend in parallel with the straight side of the main optical resonator 101.

In the example implementation depicted in Fig. 2a, the coupling and delay regions of the coupling interface 103 are realized by means of the engineered waveguide bus shaped to have an arced portion 102b-1 having a curving trajectory following that of the main optical resonator 101 and arranged to partially encircle the corresponding portion 106 of the perimeter of the main optical microresonator 101 along the coupling interface 103.

In this example embodiment, the partially encircling portion 102b-1 of the waveguide bus 102b at the coupling interface 103 has a meandering, winding or undulating profile. Accordingly, each delay region 105a - 105e has a respective delay factor to be imposed on the second set of longitudinal frequency modes of the main cavity 101. Fig. 2c shows simulation results related to the MOFCD 100c with a box-shaped coupling profile 10 over the target bandwidth, where the first set of longitudinal modes centered at the pump frequency around 1299 nm experience strong coupling, which modifies both the intracavity field (Pin) and the outcoupled spectrum (Pout), resulting in a box shaped spectral output. The second set of longitudinal modes outside the target bandwidth 10 depicted in the area 20 on Fig. 2c experience suppressed coupling by the delay regions 105a - 105e and consequently attenuated comb power. It is noted that both comb devices 100a and 100c feature a relatively low ~10% conversion efficiency. Fig. 2d shows the intra-cavity temporal power distribution.

Each delay region 105a - 105e in the coupling interface 103 may be formed by a crest portion of the meandering profile of the encircling portion in that region. For instance, the delay region 105b is shown in a zoomed-in view in box 105b. A crest portion or peak point 105b-1 of the delay region 105b is a portion of the delay region that extends away from the perimeter of the main optical resonator 101.

Each crest portion has a respective predetermined radial distance 105b-d1 from a corresponding portion 106b of the perimeter of the main optical microresonator 101 comprised in the coupling interface 103. The crest portion 105b-1 need not be only one point on the perimeter of the waveguide bus but may also encompass a segment around the peak or maximum point of the curve with a radial distance close to the maximum height of the curve as shown by the encircled box 105b-1.

The frequencies of the optical field propagating in the crest portion 105b-1 of the delay region 105b, will accumulate a frequency dependent phase accumulation compared to the field propagating in the shorter section 106b of the delay region 105b formed by the portion 106b of the perimeter of the main optical microresonator 101. Recombining the optical fields in the coupling regions leads to constructive interference at certain frequencies and destructive interference at other frequencies.

A careful engineering of optical pathway difference in the delay regions 105a - 105e and the coupling strength in the coupling regions 104a - 104f can be adapted to enforce strong overall coupling between main optical microresonator 101 and bus waveguide 102b at first set of longitudinal frequency modes, and weak coupling for the second set of longitudinal frequency modes of the microresonator. This leads to effective suppression in power of the second set of longitudinal frequency modes and enhancement of the power of the first set of longitudinal frequency modes. It should be clear to the skilled reader that different portions of each delay region other than the crest portion are arranged at their respective distances from the corresponding portions of the perimeter of the main optical microresonator 101, and contributing to the total delay factor imposed by that delay region. However, the longest radial distance of each meandering delay region will be between the crest portion of that delay region and the corresponding portion of the perimeter of the main optical microresonator 101, as described for crest portion 105b-1 and distance 105b-d1 above.

The radial distances of the delay regions may also be denoted by ΔL₀, ΔL₁, ΔL₂, ΔL₃, ΔL₄, ... ΔLₙ, wherein "n" is the number of the delay regions along the coupling interface 103. Similarly, peak points of the other delay regions 105a, 105c, 105d, 105e may be arranged at the predetermined radial distance relative to the corresponding portions of the perimeter of the main optical microresonator 101 coinciding with each delay region. Each of the coupling regions is realized by arranging the waveguide bus at a relative distance from a portion the perimeter of the main optical resonator 101 in the coupling interface 103.

However, the respective distances between the optical waveguide bus and the main optical resonator 101 in the coupling regions are considerably smaller than the radial distances between the crest portions of each delay region and the perimeter portion of the main optical resonator. For example, as shown in the zoomed-in view in box 104e for the coupling region 104e, a trough or valley portion 104e-1 of the waveguide bus 102b extending towards the perimeter of the main optical resonator is arranged at a radial distance 104e-d1 from a corresponding portion 106e of the perimeter of the main optical resonator 101 in that coupling region 104e of the coupling interface 103. The coupling factor of the coupling regions 104a - 104e (and any further number of coupling regions for that matter) may be denoted as θ₀, θ₁, θ₂, θ₃, ..., θₙ wherein "n" is the number of coupling regions along the coupling interface 103.

In this example implementation, the engineered optical waveguide bus 102b is shown to have a symmetrical and smooth meandering profile with the coupling and delay regions having a similar geometrical shape and spatial arrangement along the coupling interface 103 or along the arced portion 102b-1 of the optical waveguide bus 102b. Furthermore, the coupling and delay regions are shown to have a symmetrical periodicity and are evenly distributed at equal example distances "x₀" along the curving trajectory of the arced portion 102b-1 of the optical waveguide bus 102b or the coupling interface 103 as shown in Fig. 2b for the optical frequency comb device 100c of Fig. 2a. In this example the distances "x₀" are shown for the coupling regions 104a - 104f, however it is clear that the delay regions 105a - 105e are also arranged at same distances "x₀". It should also be noted that the distances along the coupling interface 103 may be different from each other and customized for each respective coupling and/or delay region.

It should however be appreciated that alternative engineered profiles of the coupling region 103 are also possible. For instance, the spatial distribution of the coupling and delay regions along the coupling region 103 need not be equidistant. Moreover, the geometrical shape of one or more of the coupling and/or delay regions may be different from the rest. Even further, in some examples, the radial distances between the peak points of one or more delay regions, or even the distance between the one or more coupling regions from their corresponding perimeter portions of the main optical cavity 101 may vary.

Fig. 3a shows an example implementation where some of the above-indicated geometrical and spatial arrangement variations are illustrated in order to elucidate the concept further. The main optical resonator 101 in this example has an oval shape. The coupling interface 103 of the MOFCD 100e is formed by an engineered optical waveguide bus 102c with an uneven or asymmetrical meandering profile that conforms to the shape of the main optical resonator 101 along the coupling interface 103. The engineered waveguide 102c has winding portions with different geometrical shapes and extension profiles that form respective coupling and/or the delay regions. For example, meandering portion in box 102c-1 forms the first delay region 105f having a first geometrical shape to impose a first delay factor. The meandering portion 102c-2 forms the second delay region 105g having a second geometrical shape different from the shape of the first delay region 105f. The formed second delay region 105g imposes a second delay factor which is different from the first delay factor imposed by the first delay region 105f.

The third meandering portion 102c-3 comprises two closely arranged delay regions 105h, and 105i with a similar geometrical shape and extension but different from the geometrical shape and extension of the first and second delay regions 105f and 105g. In this example, the delay regions 105f - 105i are smooth arced portions of the waveguide bus, each having a respective radius of curvature defining their different geometrical shapes and radial distances from the boundary of the main optical resonator 101.

Further, as yet another parameter defining the delay factor of the delay regions, the predetermined distances between the crests of one or more of the delay regions from the perimeter of the main optical cavity 101 may be different from the predetermined distances between the crests of one or more other delay regions. For instance, the peak point 105g-1 of the second delay region 105g has a greater radial distance 105g-d1 from the corresponding portion 106g of the perimeter of the main optical microresonator 101 compared to the respective radial distances of the peak points of the delay regions 105f - 105i from their corresponding portions of the perimeter of the main optical microresonator 101. The delay regions 105h, 105i of the third meandering portion 102c-3 have equal radial distances from the respective boundary of the optical microresonator 101.

The present inventors have realized that each coupling and/or delay region could be adapted to have a respective geometrical shape and arrangement along the proposed coupling interface 103 in order to generate a tailored frequency-selective spectral distribution of a coupling factor of the main optical microresonator 101 over a target bandwidth. In other words, the coupling between the resonantly coupled optical waveguide bus and the main optical cavity in various embodiments and aspects here can be selectively controlled and tuned over a desired bandwidth. This is remarkably advantageous, since for any particular application requiring a specific comb output spectral profile, the corresponding coupling and delay regions in the coupling interface 103 can be designed and fabricated in a customizable manner.

The generated frequency-selective spectral distribution of the coupling factor of the main optical microresonator 101 is associated with a corresponding spectral power distribution of the optical frequency comb lines in the output spectrum. This way, an enhanced power distribution is provided for the selected comb frequencies over the target bandwidth whereas the power distribution to the comb lines with frequencies outside the target bandwidth is effectively suppressed as shown in the examples of Fig. 2c, Fig. 2f and Fig. 2g.

Moving on, Fig. 2e shows a schematic illustration of another example embodiment of an optical frequency comb device 100d. The optical frequency comb device 100d in this example is also a MOFCD 100d similar to the MOFCD 100c of Fig. 2a. In this example the MOFCD 100d has four coupling regions 104a, 104b, 104c, 104d, and three respective delay region 105a, 105b, 105c.

As merely an example to further elucidate the above discussions in conjunction with Figs. 2a and 2b, all of the coupling regions 104a - 104d have the same coupling strength of θ₀, θ₁, θ₂, θ_{3,} = 0.49%, and all length differences (predetermined radial distances) of the delay regions 105a - 105c, i.e., ΔL₀, ΔL₁, ΔL₂ are set to 4.264 microns. The group index is 2.12, and the center wavelength (*λ*₀ = 2*πc*₀/*ω*₀) is 1299.1nm. The resulting scattering matrix (*Sₜₒₜ*) is simulated based on these parameters, from which the coupling strength (*θ* = |*S*₁₂|²) is shown in Fig. 2f. The results show peak coupling value of 7.66% (-11.16dB) at the center with the side-lobes being suppressed well below 1%.

The MOFCD 100d of this example has been realized in a 750 nm-thick SiN platform, with the waveguide bus 102b and the microresonator 101 having a width parameter of 1200 nm. The waveguide-to-waveguide gap along the coupling interface 103 between the waveguide bus 102b and the microresonator 101 at the coupling regions 104a - 104d was approximately 300 nm and the ring radius R₁ of approximately 111.95 microns for the microresonator 101.

A difference between the MOFCD 100d and MOFCD 100c is that MOFCD 100d further comprises an auxiliary optical element 202 that induces a frequency shift to at least one longitudinal mode of the optical resonator 101 associated with the pump CW laser frequency, increasing the frequency comb's conversion efficiency. The auxiliary optical element is arranged adjacent and optically coupled to the main optical resonator 101. As mentioned above, the auxiliary optical element 202 is configured to induce a frequency shift to a selected longitudinal frequency mode of the main optical microresonator associated with a frequency of the CW input laser light in order to enhance a power conversion efficiency of the generated optical frequency comb.

In some embodiments, the auxiliary optical element may comprise an auxiliary optical resonator 202a, e.g., another microresonator. The auxiliary microresonator 202a may be linearly coupled to the main microresonator 101 during the operation of the MOFCD 100d. When the main microresonator 101 and the auxiliary microresonator 202a are arranged in the vicinity of each other, the evanescent field of one cavity optical serves as a physical perturbation to the electromagnetic field in the adjacent microresonator. Further, the auxiliary optical element 202 may comprise a respective heater module 202b arranged in operative connection with the auxiliary optical resonator in order to tune a resonance frequency of the auxiliary optical resonator 202a.

This way the frequency shift applied to the selected longitudinal modes of the main cavity 101 can be flexibly tuned via thermo-optic effect. The auxiliary heater module 202b may be any suitable heater module 202b configured to thermally heat and tune the resonance frequency of the auxiliary microresonator 202a. For example, the thermal tuning may be accomplished by applying a voltage over the connection terminals (+) and (-) of the auxiliary heater enabling a current flow (shown by the arrow) through the resistive heater, which will generate the thermal energy for heating the auxiliary microresonator 202a. It should be appreciated that other suitable tuning methods and techniques than thermal tuning may be used to tune the resonance frequency of the auxiliary microresonator 202a.

In this example the provided auxiliary ring resonator 202a is added for better efficiency and easier comb initiation, with radius R₂ being approximately 27.5 microns. The MOFCD 100d has been characterized using swept wavelength interferometry, resulting in free spectral range (FSR) of 199.1 GHz, intrinsic quality factor (*Qᵢ*) near 6 million, and group velocity dispersion (*β*₂) of -92 ps²/km. The measured coupling factor is displayed in Fig. 2f, demonstrating a notable agreement between simulation and measurement results.

The MOFCD 100d was initiated and operated using the same methods as described in EP4116767 by the same inventors, pumping the MOFCD 100d with a 200 mW CW laser at Fc = 1299.1 nm wavelength. The measured output spectrum is shown in Fig. 2g, showing a clear correlation between the power of the comb lines and the coupling spectrum, resulting in high power generated near 1300 nm and high suppression above 1340 nm and below 1260 nm. The spectral shape has sharper roll-off compared to the more traditional soliton shapes. The comb is replicated in simulation using the shifted resonance model described by the same inventor in EP4116767 with the traditional coupling matrix replaced with simulated scattering matrix of Fig. 2f. The nonlinear coefficient used was set to *y* = 1.72 (*W* · *m*)⁻¹ based on mode-solver simulation. The detuning experienced by the component at pump frequency (pump detuning) is *δₚᵤₘₚ* = 0.11 *rad,* while the detuning experienced by all other frequency components of the comb is *δ_{comb}* = 0.09 *rad.* Both detuning parameters were optimized to match the simulated spectrum to the measurements.

The resulting spectral envelope is plotted in Fig. 2g, matching well the overall spectral features of the measurement. As such, it is demonstrated, through both simulation and measurements, a tailored coupling spectrum that is generated to enhance the output power spectrum of the MOFCD 100d.

As shown in the example of Fig. 2b, the geometrical shape and dimensions of the auxiliary optical resonator 202a may be similar to, or different than the main optical resonator 101. For instance, the main optical resonator 101 in Fig. 2b has an annular shape with a radius R₁, whereas the auxiliary optical resonator 202a has an annular shape with a radius R₂ which is smaller than R₁. For instance, R₁ may be at least two, three, four, five, six, seven, eight, nine or n-fold larger (wherein "n" is an integer denoting the size ratios between the resonators) than R₂.

Accordingly, by arranging the auxiliary optical element 202 and further optimizing the power conversion efficiency of the MOFCD 100d to levels approaching 32% compared to the conventional power conversion efficiency of 10% in optical frequency comb devices without the external tuning capability e.g. the MOFCD 100c in Fig. 2a, the output spectrum of the optical frequency comb device over the target bandwidth can be further tuned and optimized as shown in Figs. 2f and 2g. Fig. 2f shows the measured and simulated distribution of the coupling factor. Fig. 2g shows a measurement of the generated on-chip output spectrum when the MOFCD 100d is pumped with a CW laser near a wavelength of 1299 nm.

In the example output spectrum of the MOFCD 100d in Fig. 2f and 2g, a coupling profile having strong coupling within a 50 nm bandwidth centered at 1299 nm and dropping sharply in strength at other wavelengths is shown. This effectively leads to a plurality of the first longitudinal modes 100d-L1 e.g. approximately 40 comb lines within 5 dB bandwidth of the comb envelope, 54 comb lines within 10 dB bandwidth, and 63 comb lines within 15 dB bandwidth. It should be appreciated that the number of the modes may be any other number than above-mentioned examples. As mentioned earlier, this modifies both the intracavity field and the outcoupled spectrum, resulting in a box shaped spectral output for the MOFCD 100d. The second set of longitudinal modes 100d-L2 falling outside the target bandwidth are effectively attenuated.

Fig. 3b shows yet another schematic illustration of an example implementation of optical frequency comb devices 100f in accordance with some embodiments herein. The design of the comb device 100f is similar to the MOFCD 100d in Fig. 2e with four exemplary coupling regions 104a, 104b, 104c, 104d, and three delay regions 105a, 105b, 105c comprised in the coupling interface 103. The optical frequency comb device 100f in this example may comprise a first auxiliary optical element 203-1, 203-2 arranged adjacent to respective delay regions 105a, 105c of three delay regions 105a, 105b, 105c in the coupling interface 103.

Clearly, different number of auxiliary optical elements may be arranged in the vicinity of the respective delay regions, for instance all the delay regions present in the coupling interface 103 may have their respective auxiliary optical element arranged therewith. In operation, the first auxiliary optical element is adapted to be optically coupled to its respective delay region 105a, 105c. The first auxiliary optical element 203-1, 203-2 enables a tunable suppression of optical coupling of the second set of longitudinal frequency modes of the main microresonator 101.

The example of Fig. 3b shows one first auxiliary optical element 203-1 arranged linearly coupled to its respective delay region 105a, and also one first auxiliary optical element 203-2 arranged linearly coupled to its respective delay region 105c. This way, an additional delay could be imposed on the second set of longitudinal frequency modes in the comb output spectrum, further tailoring the power spectral distribution of the comb. In some embodiments, the first auxiliary optical element may comprise a first auxiliary optical resonator 203-1a, 203-2a and a respective heater module 203-1b, 203-2b arranged in operative connection with the respective first auxiliary optical resonator 203-1a, 203-2a and configured to tune a resonance frequency of the first auxiliary optical resonators 203-1a, 203-2a.

In some embodiments, the optical resonators 203-1a, 203-2a may be microresonators. By implementing the heater modules placed on the delay-inducing optical resonators 203-1a, 203-2a, having a ring-shaped geometry in this example, to be referred to as delay rings 203-1a, 203-2a, another dimension of flexibility and tunability of the applied delays to the anti-phase frequencies could be realized by straightforward adjustment of thermo-optic tuning of the delay rings 203-1a, 203-2a. Furthermore, precision of anti-phase wavelength or frequency selectivity would be advantageously improved without the need of otherwise adding further delay regions to the coupling interface 103 when additional coupling suppression might be needed.

An additional advantage of implementing delay-inducing auxiliary elements such as the delay rings 203-1a, 203-2a is that optical comb initiation and stabilization dynamics of the optical frequency com devices 100f could be improved, e.g., by lowering the comb initiation threshold, i.e., the required CW pump power, by selectively reducing the coupling factor at the CW pump frequency at the time of initiating the comb.

It should be clear to the skilled person that the geometrical shape and dimensions of the first auxiliary optical resonators may be similar to or different than the main optical resonator. For instance, the main optical resonator 101 in Fig. 3b has an annular shape with a radius R₁, the optical resonator 203-1 has an annular shape with a radius R₃ which is smaller than R₁, and the optical resonator 203-2 has an annular shape with a radius R₄, which is substantially the same as R₁ but is larger than R₃. In example implementations, R₁ may be substantially equal or may be at least two, three, four, five, six, seven, eight, nine or n-fold larger (wherein "n" is an integer denoting the size ratios between the resonators) than the radii of the other optical resonators 203-1a, 203-2a. A similar relationship is analogously conceivable between the sizes and shapes of the first auxiliary optical resonators when multiple optical resonators such as 203-1a, 203-2a are implemented.

In some embodiments, the MOFCD 100f may optionally comprise an auxiliary optical element 202 (shown in dashed line), that may be referred to as the second auxiliary optical element 202 here in order to distinguish it from the first auxiliary optical elements 203-1, 203-2 coupled to the respective delay regions 105a, 105c, similar to MOFCD 100d in the example of Fig. 2e.

With reference to Fig. 3c, yet another example embodiment of an optical frequency comb device 100g has been schematically shown. In this example, in contrast to the example embodiments in Figs. 2a, 2e or Figs. 3a and 3b instead of the engineered optical waveguide bus, a portion 107 of the perimeter of the main optical microresonator resonator 101 along the coupling interface 103 that has an undulating profile. Therefore, the coupling and delay regions are now formed by the geometrical shape of the portion 107 of the main optical resonator 101. In this example the meandering portion 107 of the main optical resonator 101 may be conformed to or encircled by the portion 102d-1 of the optical waveguide bus 102d along the coupling interface 103. In this example, the corresponding portion 102d-1 of the optical waveguide bus 102d partially encircles the annular shaped main optical resonator 101. However, it should be clear that the waveguide bus may be a straight waveguide bus 102a (not specifically shown) extending past the portion 107 of the main optical resonator 101 in order to form the engineered coupling interface 103.

Accordingly, each delay region 107a, 107b, 107c, 107d, 107e may be formed by a corresponding crest portion of the meandering portion 107 of the main optical resonator 101. Each crest portion may thus have a respective predetermined radial distance relative to a corresponding portion of a perimeter of the optical waveguide bus 102d. For instance, the delay region 107c, may have a crest portion 107c-1 that has a radial distance 107c-d1 from the corresponding portion 102d-1a of the partially encircling portion 102d-1 of the optical waveguide bus 102d.

Similar to example implementations with reference to Figs. 2a, 2e and Figs. 3a, 3b each delay region herein would have a respective delay factor to be imposed on the second set of longitudinal frequency modes that may be proportional to the predetermined radial distances of respective crest portions. The coupling regions formed by the engineered portion 107 of the main optical resonator 101 also function similar to the ones provided by the engineered portion of the optical waveguide bus as discussed previously. It should be noted that in this example, the crest portions of the main optical resonator 101 extend inwards and away from the boundary of the optical waveguide bus 102d in the coupling interface 103 in order to form the respective delay regions.

In some embodiments, both the optical waveguide bus 102d and the main optical resonator 101 may comprise engineered portions e.g., undulating portions spatially arranged relative to each other in order to form the engineered coupling interface 103. This will be discussed further below in conjunction with Figs. 3e - 3h.

With reference to Fig. 3d, an optical frequency comb 100h is schematically depicted. In this example, the main optical resonator 101 has a polygonal geometrical shape, more specifically a hexagonal shape made of substantially straight sides. It should be appreciated that the presented drawing is simply a schematic illustration and the shape of the optical resonator 101 of the actual comb device may not have perfectly straight sides and/or vertices but rather be subject to manufacturing tolerances. The optical waveguide bus 102e in this example has a portion 102e-1 included in the coupling interface 103 that extends substantially straight and conforms to the geometrical shape of one of the sides 108 of the hexagonal optical resonator 101 that is also included in the example coupling interface 103. The optical coupling and interaction between the optical waveguide bus 102e and the main optical resonator 101 in this case is also similar to the previously discussed examples above, wherein each delay region imposes a respective delay factor to the set of selected frequencies whose optical coupling should be selectively suppressed.

Once again, the geometry of the meandering portion 102e-1 of the optical waveguide bus 102e may be symmetrical or asymmetrical and the geometrical shape of individual coupling and/or delay regions may be engineered to achieve intended coupling factors over the target frequency bandwidth. In some embodiments, example optical frequency combs in Figs. 3a, 3c, and 3d may also optionally include the first auxiliary optical elements (not specifically shown) similar to the first auxiliary optical resonators 203-1a, 203-2a in Fig. 3b for tuning the delay factors of the delay regions. Furthermore, the example optical frequency combs may optionally include the second auxiliary optical elements 202 comprising the second auxiliary optical resonators 202a and heater modules 202b. As explained earlier with reference to Fig. 3a, the optical waveguide bus and/or the main optical resonator in examples of Figs. 3b - 3d may have an irregular shape at the coupling interface, e.g., with an irregular undulating profile that imposes corresponding delay factors at each of its respective delay regions that are different from each other.

As mentioned in conjunction with Figs. 3a - 3d, the presented solutions herein by utilizing the customized MZ interferometer implementation along the coupling interface 103 provides ample opportunities to realize a variety of different designs with tailored output comb spectrum shapes.

For instance, in a further exemplary embodiment illustrated in Fig. 3e, an optical frequency comb 100i featuring 8 delay regions of varying lengths along the coupling interface 103 is presented. In this example implementation, both the optical waveguide bus 102f and the main optical resonator 101 comprise engineered portions e.g., undulating portions spatially arranged relative to each other in order to form the engineered coupling interface 103.

The coupling interface 103 is optimized to provide a flat-coupling rate (see Fig. 3f) at the center with an even sharper transition to lower coupling rates at the edges.

The coupler design is made symmetric such that *θ*₀ = *θ*₈ = 0.00324%, *θ*₁ = *θ*₇ = 0.0486%, *θ*₂ = *θ*₆ = 0.243%, *θ*₃ = *θ*₅ = 1.053%, *θ*₄ = 1.62%, where *θ*₀ is the first coupling region starting from the left side of the coupling interface 103 and *θ*₈ is the last coupling section located on the rightmost side of the coupling interface 103. The physical length difference of the delay regions 107a - 107h are ΔL₀ = ΔL₇ = -36.244 µm, ΔL₁ = ΔL₆ = 17.056 µm, ΔL₂ = ΔL₅ = -6.396 µm, ΔL₃ = ΔL₄ = 4.246 µm, with negative value signifying a longer delay in the main optical resonator 101. With the delay region 107a (ΔL₀) being the leftmost, and the delay region 107h (ΔL₇) the rightmost delay region along the interface 103, with the other delay regions arranged there between.

The group index in this example is 2.12, the center wavelength (λ₀ = 2πc₀/ω₀) is 1299.1nm and β₀ΔLₙ is an integer multiple of 2π. An output spectrum of the comb 100i is simulated based on this comb device 100i using 50 mW of input power, δ_{comb} = 0.15 rad and δₚᵤₘₚ = 0.145 rad, wherein these values were selected to optimize the conversion efficiency of the comb. All other parameters were kept the same as for the OFC 100d and comb spectrum in Fig. 2g. Fig. 3f shows the calculated overall coupling indicating that the coupling has been optimized towards a flat middle section with a sharp fall-off. The resulting comb spectrum is displayed in Fig. 3g and Fig. 3h, showing a flatter spectrum with a much sharper fall-off compared to the OFC 100d in Fig. 2e. In some example implementations, thermal tuners (not specifically shown) may be arranged on the coupling regions to align the phase offsets of the delay lines such that β₀ΔLₙ is an integer multiple of 2π at the desired wavelength. Fig. 3f shows the calculated overall coupling along the coupling interface 103, indicating that the coupling has been optimized towards a flat middle section with a sharp fall-off. Fig. 3g shows a simulated output power for the comb envelope using the MOFCD 100i. Fig. 3h shows a closer look at the comb spectrum where each individual comb line can be seen more clearly.

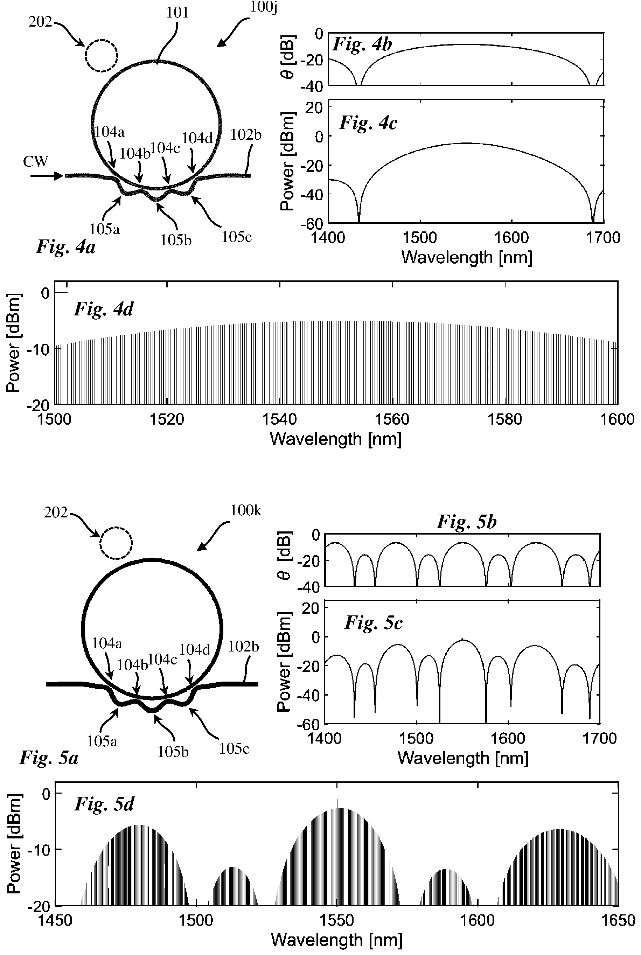

Figs. 4a - 4d, Figs. 5a - 5d, and Figs. 6a - 6d show further example implementation of the optical frequency comb devices according the present disclosure, wherein by meticulously designing the coupling interface 103 and respective coupling and delay factors of the coupling and delay regions, customize output comb spectrums can be realized.

Fig. 4a, shows a MOFCD 100j, which is similar to the MOFCD 100d in Fig. 2e. In this example the MOFCD 100j comprises a 50GHz main cavity 101, a CW pump wavelength *λ*₀ = 1550nm, group index of 2.1, *γ* = 1 (*W* · *m*)⁻¹ and group velocity dispersion of -92 ps²/km, and intrinsic propagation loss of 4.34 dB/m. All three delay lines 105a - 105c, have the same delay factor of ΔL₀ = ΔL₁ = ΔL₂ = 3 microns length mismatch and fixed coupling rate of *θ*₀ = *θ*₁ = *θ*₂ = *θ*₃ = 1.5% in all coupling regions 104a - 104d. The result is a spectral coupling distribution shown in Fig. 4b, and a power distribution of the generated comb shown in Figs. 4c - 4d. The input pump power used for maintaining the comb is 75 mW, the detuning parameters are set to *δₚᵤₘₚ* = *δ_{comb}* = 1.0 *rad.* The resulting features, similar to Figs. 2f - 2g, clearly show a sharper roll-off factor in the power spectrum compared to a traditional soliton. However, it should be appreciated that this example involves a much higher number of comb lines, with more than 200 lines being generated within a 3dB bandwidth. Thus, this example implementation shows that the coupling scheme can advantageously be scaled in terms of line spacing, number of lines, center wavelength and power-per-line.

The variation in the coupling factor caused by each delay region has an oscillatory frequency response, which repeats when *β*₁(*ω* - *ω*₀)Δ*L* has a 2*π* increment, i.e. it has a period of Δ*ω* = 2*π*/(*β*₁Δ*L*). This period of the oscillation can thus be tuned by either changing the group index or the physical length difference. The period is chosen by setting the physical length distance difference from zero up to the length of the main cavity, i.e. where the Δ*ω* becomes similar to the line spacing. In some examples, tuning of the optical path length can also be accomplished by changing the refractive index, e.g. by changing the waveguide dimensions or by placing a heater on the waveguide or using other index tuning methods such as the Pockels effect.

Moving on, Figs. 5a - 5d show another example embodiment, and MOFCD 100k with a customized output comb spectrum.

In Fig. 5a, the MOFCD 100k is shown to have a number of coupling and delay regions similar to the MOFCD 100j in Fig. 4a and Fig. 2e. In this example, all three delay lines 105a - 105c, have the same delay factor of ΔL₀ = ΔL₁ = ΔL₂ = 15 microns length mismatch and fixed coupling rate of *θ*₀ = *θ*₁ = *θ*₂ = *θ*₃ = 2.6% in all coupling regions 104a - 104d. All other parameters in this example were set to the same values as in Figs. 4a - 4d, with *δₚᵤₘₚ* = *δ_{comb}* = 1.3 *rad.*

The result is a coupling profile (see Fig. 5b) that has high coupling values repeating with a roughly 9.2 THz cycle. This enables a drastically different profile for the output microcomb spectrum (see Figs. 5c - 5d) with high comb-power in the near the pump frequency, and at the nearest lobes of high coupling values at ~1480 nm and ~1630 nm. This shows that the coupling scheme can be tailored to enhance the comb power of multiple different portions of the output spectrum, which can be advantageous for applications such as enhancing a beat note of an octave spanning comb for detection, or when using the comb for spectroscopy of features that occur at discrete locations along the optical spectrum.

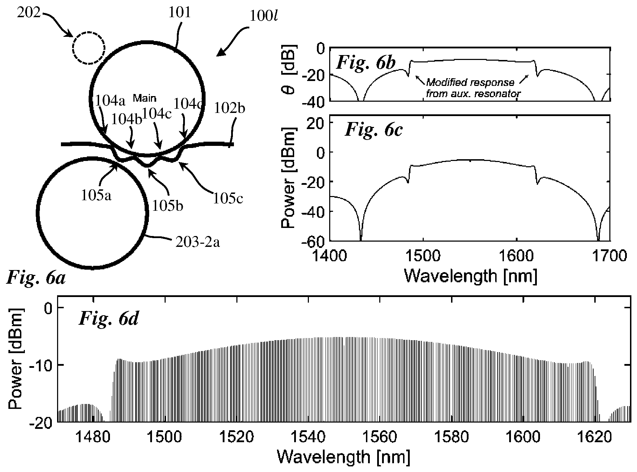

In yet another example implementation illustrated in Figs. 6a - 6d, a MOFCD 100*l* similar to MOFCD 100f in Fig. 3b is described.

The coupling spectrum in this example has been further modified by introducing the auxiliary element 203-3a similar to the first auxiliary optical resonator 203-2a in Fig. 3b. The auxiliary optical resonator 203-3a interacts with the delay regions 105a of the coupling interface 103. The coupling interface has three delay regions 105a - 105c with the equal delay factors of 3 microns each and equal coupling factors of 1.45% in the coupling regions 104a - 104c. All other parameters are the same as in the example of Fig. 4a. The auxiliary microresonator 203-3a coupled to the first delay regions 105a, is arranged with the purpose of adding an extra phase shift at selective frequencies. From the perspective of the comb, this phase shift only occurs when the auxiliary resonances align with the frequencies of the comb lines. The scattering matrix is thus modified as: ${D}_{n} = \left(\begin{matrix}{H}_{ring} {e}^{i Δ ϕ} & 0 \\ 0 & 1\end{matrix}\right) , {H}_{ring} = {e}^{i \left(π+{β}_{s}{L}_{s}\right)} \frac{a - {re}^{- i \left({β}_{s}{L}_{s}\right)}}{1 - {rae}^{i \left({β}_{s}{L}_{s}\right)}} ,$ where *H_{ring}* is the throughput response of the auxiliary resonator 203-3a, with *βₛ* = *β*_{*s*0} + *β*_{*s*1}(*ω* - *ω*₀) being the propagation constant of the auxiliary resonator waveguide 203-3a, *Lₛ* being the resonator roundtrip length, "a" being the attenuation factor per roundtrip due to intrinsic losses and $r = \sqrt{1 - {θ}_{s}}$, with *θₛ* being the coupling strength to the auxiliary resonator 203-3a. For this example, the auxiliary ring resonator 203-3a is set to have a=0.99, *θₛ* = 15%, group index 2.1 and cavity length of 2.84662 mm. The auxiliary FSR is thus 50.15 GHz, which is 0.3% larger than the main cavity 101 and causes the effect from the auxiliary resonator 203-3a to be a walk-off effect with regards to the generated comb. The phase offset is set such that *β*_{*s*0}*Lₛ =* π + 2*πm,* with m being an integer value, resulting in the auxiliary resonance to be offset by half FSR at the reference wavelength *λ*₀ = 1550nm. The resulting coupling distribution of the MOFCD 100*l* (see Fig. 6b) is essentially the same as in Fig. 4b, except at the locations where the auxiliary resonances of the auxiliary resonator 203-3a align with the frequency grid and cause a perturbation. This leads to the middle section to have a more rectangular shape and a sharp transition to the lower coupling level at the edge. As a consequence, the resulting comb shape (see Fig. 6c - 6d) does indeed have a spectral power distribution that is flatter and more box-like compared to previous examples, which is very appealing for applications such as data communications.

Fig. 7 shows a schematic flowchart of an exemplifying method **400** according to several embodiments of the present disclosure. The method **400** is for generating a frequency-selective spectral output for an optical frequency comb device 100c - 1001. The optical frequency comb device comprises a main optical resonator. The main optical resonator 101 may be an optical microresonator 101 as described earlier. The optical frequency comb device further comprises an optical waveguide bus such as the ones described previously with respect to Figs. 2a, 2e and Figs. 3a - 3d.

The method **400** comprises providing **401** a main optical resonator 101 made of a first material having nonlinear material characteristics and an optical waveguide bus 102b - 102f configured to be optically coupled to the main optical resonator 101. The optical frequency comb device 100c - 100*l* comprises a coupling interface 103 formed between the main optical resonator 101 and the optical waveguide bus 102b - 102f by spatially arranging the main optical resonator 101 and the optical waveguide bus 102b - 102f such that the coupling interface 103 has at least two coupling regions 104a - 104f and at least one delay region(s) 105a - 105e; 107a - 107h. In some example embodiments, the coupling interface 103 may comprise at least two delay regions 105a - 105e; 107a -107h to suppress optical coupling of the second set of longitudinal frequency modes of the main microresonator 101 to the engineered optical waveguide bus 102b- 102f.

The method **400** further comprises providing **403** a continuous wave (CW) laser as input laser light to be received by the optical waveguide bus such that the CW input laser light is coupled to the main optical resonator 101 to generate an optical frequency comb. The method **400** further comprises enhancing **405** optical coupling of a first set of longitudinal frequency modes of the main optical resonator 101 to the optical waveguide bus 102b - 102f and suppressing **407** optical coupling of a second set of longitudinal frequency modes of the main resonator 101 to the optical waveguide bus 102b - 102f by the at least two coupling regions 104a - 104f, and by the at least one delay region(s) 105a - 105e; 107a - 107h of the coupling interface 103.

The method **400** further comprises selectively generating **409** a tailored output spectrum of the optical frequency comb over a target frequency bandwidth including the first set of longitudinal frequency modes. By "selectively" generating in the present context it is meant that the frequency-selective spectral distribution of the coupling factor of the main optical microresonator 101 is associated with a corresponding spectral power distribution of the optical frequency comb lines in the output spectrum. This way, an enhanced power distribution is provided for the selected comb frequencies over the target bandwidth whereas the power distribution to the comb lines with frequencies outside the target bandwidth is suppressed. As mentioned previously, the target bandwidth could be selected as a narrow bandwidth intended for a specific application such as telecommunication, sensing, etc.

In some embodiment, the optical frequency comb device e.g., as explained for the comb device 100e in Fig. 2c may further comprise a first auxiliary optical element 203-1, 203-2 arranged adjacent to respective delay regions 105a, 105c of the delay regions 105a, 105b, 105c in the coupling interface 103. In operation, the first auxiliary optical element is adapted to be optically coupled to its respective delay region 105a, 105c. In some embodiments, the first auxiliary optical element may comprise a first auxiliary optical resonator 203-1a, 203-2a and a respective heater module 203-1b, 203-2b arranged in operative connection with the respective first auxiliary optical resonator 203-1a, 203-2a.

The method **400** may further comprise providing **411** the first auxiliary optical element in form of a first auxiliary optical resonator 203-1a, 203-2a and a respective heater module 203-1b, 203-2b arranged in operative connection with the respective first auxiliary optical resonator 203-1a, 203-2a. The method **400** may further comprise tuning **413** a resonance frequency of the first auxiliary optical resonators 203-1a, 203-2a by controlling operation of the respective heater module 203-1b, 203-2b for each of the first auxiliary optical resonators 203-1a, 203-2a. The method **400** may further comprise imposing **415** an additional delay on the second set of longitudinal frequency modes of the main microresonator 101and thereby enabling a tunable suppression of optical coupling of the second set of longitudinal frequency modes of the main microresonator 101.

The different features and steps of the embodiments may be combined in other combinations than those described. It should be noted that the word "comprising" does not exclude the presence of other elements or steps than those listed and the words "a" or "an" preceding an element do not exclude the presence of a plurality of such elements. It should further be noted that reference signs do not limit the scope of the claims. Some example embodiments of the present disclosure may be at least in part implemented by means of both hardware and software. For instance, even if not specifically shown, different modules such as the heater modules may be controlled by implementing control electronics such as one or more processing circuitry, microcontrollers, programmed microprocessors, general-purpose computers, Application Specific Integrated Circuits (ASICs) and/or using one or more Digital Signal Processors (DSPs) or some other programmable logical device, such as a Field Programmable Gate Array (FPGA) executing instructions to generate and apply appropriate signals for tuning of the auxiliary optical elements. It should be appreciated that other implementation of some of the components than what has been depicted in the figures may be possible without departing from the scope of the claims. For instance, in some example embodiments, the main optical resonator could be made of a waveguide with mirrors at the endpoints, e.g. using a distributed Bragg reflector (DBR) or the like.

Although the figures may show a specific order of method steps, the order of the steps may differ from what is depicted. In addition, two or more steps may be performed concurrently or with partial concurrence.

## Claims

1. An optical frequency comb device (100c - 1001) comprising:
a main optical resonator (101) made of a first material having nonlinear material characteristics;
an optical waveguide bus (102b - 102f) configured to receive input laser light, and to be optically coupled to the main optical resonator, such that the input laser light is coupled to the main optical resonator to generate an optical frequency comb;
wherein the main optical resonator and the optical waveguide bus are spatially arranged to form a coupling interface (103) that has at least two coupling regions (104a - 104f) and at least one delay region (105a - 105e; 107a - 107h), wherein the coupling interface is configured to enhance optical coupling of a first set of longitudinal frequency modes of the main optical resonator to the optical waveguide bus, and to suppress optical coupling of a second set of longitudinal frequency modes of the main resonator to the optical waveguide bus, and thereby generate a tailored output spectrum of the optical frequency comb over a target frequency bandwidth including the first set of longitudinal frequency modes.

2. The optical frequency comb device (100c - 1001) according to claim 1, wherein each delay region (105a - 105e; 107a - 107h) is adapted to have a respective geometrical shape and arrangement along the coupling interface to generate a corresponding frequency-selective spectral distribution of a coupling factor of the main optical resonator (101);
wherein each generated frequency-selective spectral distribution of the coupling factor of the main optical resonator is associated with a corresponding spectral power distribution of the optical frequency comb lines.

3. The optical frequency comb device (100c - 100*l*) according to any one of claims 1 or 2, wherein the main optical resonator (101) has an annular, polygonal, toroidal, or an irregular shaped circuit structure; and
wherein a portion of the waveguide bus (102b - 102f) at the coupling interface conforms to the structural shape of a corresponding portion of a perimeter of the main optical resonator.

4. The optical frequency comb device (100c - 100*l*) according to any one of claims 1 or 2, wherein the portion of the optical waveguide bus is arranged to partially encircle the corresponding portion of the perimeter of the main optical resonator (101) along the coupling interface (103).

5. The optical frequency comb device (100c - 100*l*) according to any one of claims 3 or 4, wherein the conforming or the partially encircling portion of the waveguide bus (102b - 102f) at the coupling interface (103) has a meandering profile; and
wherein each delay region is formed by a respective crest portion of the meandering portion of the waveguide bus, the crest portion having a respective predetermined radial distance relative to a corresponding portion of the perimeter of the main optical resonator, wherein each delay region has a respective delay factor, to be imposed on the first and second sets of longitudinal frequency modes, that is proportional to the predetermined radial distance.

6. The optical frequency comb device (100c - 100*l*) according to any one of claims 3 or 4, wherein the corresponding portion of the perimeter of the main optical resonator (101), being conformed to or encircled by the portion of the optical waveguide bus (102b - 102f) along the coupling interface (102b - 102f), has a meandering profile;
wherein each delay region is formed by a crest portion of the meandering portion of the main optical resonator having a respective predetermined radial distance relative to a corresponding portion of a perimeter of the optical waveguide bus, wherein each delay region has a respective delay factor, to be imposed on the first and second sets of longitudinal frequency modes, that is proportional to the predetermined radial distance.

7. The optical frequency comb device (100c - 100*l*) according to any one of preceding claims, wherein the optical frequency comb device further comprises a first auxiliary optical element (203-1, 203-2) arranged adjacent to a respective delay region (105a, 105c) of the at least one delay region (105a - 105e; 107a - 107h), wherein the first auxiliary optical element is adapted to be optically coupled to its respective delay region in order to enable a tunable suppression of optical coupling of the second set of longitudinal frequency modes of the main resonator.

8. The optical frequency comb device (100c - 100*l*) according to any one of preceding claims, wherein the optical frequency comb device further comprises a second auxiliary optical element (202) arranged adjacent and optically coupled to the main optical resonator (101), wherein the second auxiliary optical element is configured to induce a frequency shift to a selected longitudinal frequency mode of the main optical resonator associated with a frequency of the input laser light in order to enhance a power conversion efficiency of the generated optical frequency comb.

9. The optical frequency comb device (100c - 100*l*) according to any one of claims 7 or 8, wherein the first and/or the second auxiliary optical elements comprise:
a first (203-1a, 203-2a) and/or a second (202a) auxiliary optical resonator, and respective heater modules (203-1b, 203-2b; 202b) arranged in operative connection with the first and/or the second auxiliary optical resonator and configured to tune a resonance frequency of the first and/or the second auxiliary optical resonators.

10. The optical frequency comb device (100c - 100*l*) according to any one of preceding claims, wherein the main optical resonator (101) made from the first material has a normal dispersion or an anomalous dispersion.

11. The optical frequency comb device (100c - 100*l*) according to any one of preceding claims, wherein the at least two coupling regions (104a - 104f) and the at least one delay region (105a - 105e; 107a - 107h) of the coupling interface are adapted to enforce constructive and destructive interferences on the first and the second set of longitudinal frequency modes of the main optical resonator.

12. The optical frequency comb device (100c - 100*l*) according to any one of the preceding claims, wherein the delay factor of each delay region (105a - 105e; 107a - 107h) is tunable by adjusting any one of the geometrical shape of that delay region, the respective predetermined radial distance of that delay region relative to the corresponding portion of the perimeter of the main optical resonator or the waveguide bus, a predetermined geometrical width parameter of that delay region, or the arrangement of that delay region along the coupling interface.

13. A method (400) of generating a frequency-selective spectral output for an optical frequency comb device (100c - 1001), wherein the method comprises:
providing (401) a main optical resonator (101) made of a first material having nonlinear material characteristics and an optical waveguide bus (102b - 102f) configured to be optically coupled to the main optical resonator (101), wherein the optical frequency comb device (100c - 100*l*) comprises a coupling interface (103) formed between the main optical resonator (101) and the optical waveguide bus (102b - 102f) by spatially arranging the main optical resonator and the optical waveguide bus such that the coupling interface (103) has at least two coupling regions (104a - 104f) and at least one delay regions (105a - 105e; 107a - 107h);
wherein the method further comprises:
providing (403) input laser light to be received by the optical waveguide bus such that the input laser light is coupled to the main optical resonator to generate an optical frequency comb;
enhancing (405) optical coupling of a first set of longitudinal frequency modes of the main optical resonator (101) to the optical waveguide bus (102b - 102f), and suppressing (407) optical coupling of a second set of longitudinal frequency modes of the main resonator (101) to the optical waveguide bus (102b - 102f) by the at least two coupling regions (104a - 104f) and the at least one delay region (105a - 105e; 107a - 107h);
selectively generating (409) a tailored output spectrum of the optical frequency comb over a target frequency bandwidth including the first set of longitudinal frequency modes.

14. The method (400) according to claim 13, wherein the optical frequency comb device further comprises a first auxiliary optical element (203-1, 203-2) arranged adjacent to a respective delay region (105a, 105c) of the at least one delay region (105a - 105e; 107a - 107h) in the coupling interface (103), wherein the method further comprises:
providing (411) the first auxiliary optical element in form of a first auxiliary optical resonator (203-1a, 203-2a) and a respective heater module (203-1b, 203-2b) arranged in operative connection with the respective first auxiliary optical resonator (203-1a, 203-2a);
tuning (413) a resonance frequency of the first auxiliary optical resonators (203-1a, 203-2a) by controlling operation of the respective heater module (203-1b, 203-2b) for each of the first auxiliary optical resonators;
imposing (415) an additional delay on the first and second sets of longitudinal frequency modes of the main microresonator (101) and thereby enabling a tunable suppression of optical coupling of the second set of longitudinal frequency modes and enhancement of optical coupling of the first set of longitudinal frequency modes of the main microresonator (101).
